# EUROPÄISCHE PATENTSCHRIFT

(11) **EP 3 151 476 B1**
(45) Veröffentlichungstag und Bekanntmachung des Hinweises auf die Patenterteilung: **30.06.2021**
(21) Anmeldenummer: 16191487.4
(22) Anmeldetag: 29.09.2016
(51) Int. Cl.: H04L 12/437, H04L 12/40

(54) **VERFAHREN ZUM QUERVERKEHR ZWISCHEN ZWEI SLAVES EINES RINGFÖRMIGEN DATENNETZWERKS**
METHOD FOR CROSS-TRAFFIC BETWEEN TWO SLAVES OF A RING -SHAPED DATA NETWORK
PROCEDE DE TRAFIC TRANSVERSAL ENTRE DEUX ESCLAVES D'UN RESEAU DE DONNEES EN BOUCLE

(30) Priorität: 01.10.2015 AT 508312015
(43) Veröffentlichungstag der Anmeldung: 05.04.2017
(73) Patentinhaber: B&R Industrial Automation GmbH, 5142 Eggelsberg (AT)
(72) Erfinder: Bruckner, Dietmar, 5102 Anthering (AT); Prenninger, Franz, 5261 Helpfau-Uttendorf (AT)
(74) Vertreter: Patentanwälte Pinter & Weiss OG

(56) Entgegenhaltungen:
- EP-A1- 2 020 782
- EP-A1- 2 290 882
- EP-A1- 2 560 325
- None

## Beschreibung

Die gegenständliche Erfindung betrifft ein Verfahren zur Datenkommunikation in Form von Querverkehr zwischen zumindest zwei Slaves eines ringförmigen echtzeitfähigen Datennetzwerks, wobei ein Master mit einem ersten Zweig des ringförmigen Datennetzwerks mit einer Anzahl von Slaves und mit einem zweiten Zweig des ringförmigen echtzeitfähigen Datennetzwerks mit einer Anzahl von Slaves verbunden wird und die Enden der Zweige mit einem als Ringmaster vorgesehen Slave verbunden werden und ein entsprechend konfiguriertes ringförmiges echtzeitfähiges Datennetzwerk.

In einem Datennetzwerk ist ein Netzwerkprotokoll implementiert, mit dem Daten in Datenpaketen auf dem Datennetzwerk zwischen den mit dem Datennetzwerk verbundenen Netzwerkknoten übertragen werden. Das heute wohl bekannteste und am weitesten verbreitete Netzwerkprotokoll ist das Ethernet-Protokoll. Ethernet definiert hierzu Datenpakete (auch Datenframe oder Ethernetframe genannt), in denen Daten eines übergeordneten Kommunikationsprotokolls in einem Ethernet-Datenpaket gekapselt übertragen werden können. Hierbei können in einem Ethernet-Datenpaket Daten des Kommunikationsprotokolls mit einer Datenlänge zwischen 46 und 1500 Byte übertragen werden. Die Adressierung im Ethernet-Protokoll erfolgt über die MAC (Media Access Control) Adressen der Netzwerkknoten, die für jedes Netzwerkgerät eindeutig vergeben ist. Ethernet ist aus Sicht des bekannten OSI-Schichtmodells ausschließlich auf den Schichten 1 und 2 implementiert. In den höheren Schichten können verschiedene Kommunikationsprotokolle implementiert sein. Hierbei hat sich eine Vielzahl von Kommunikationsprotokollen etabliert, wie beispielsweise IP auf Schicht 3 oder TCP und UDP auf Schicht 4, um einige weit verbreitete Kommunikationsprotokolle zu nennen.

Hardwaremäßig sind heutige Ethernetsysteme sogenannte geschaltete Datennetzwerke, in denen einzelne Netzwerkknoten nicht direkt miteinander verbunden sein müssen und nicht direkt miteinander kommunizieren können müssen, sondern über Kopplungselemente, beispielsweise Netzwerkswitches oder Netzwerkhubs, verbunden sein können. Ein Kopplungselement hat hierzu eine Anzahl von Netzwerkports, an die ein Netzwerkteilnehmer (entweder ein Netzwerknoten oder ein anderes Kopplungselement) angeschlossen werden kann. Ein solches Kopplungselement leitet ein Ethernet-Datenpaket entweder an alle Ports (Hub) oder an (einen) bestimmte(n) Port(s) (Switch) weiter. Damit werden in einem geschalteten Datennetzwerk sogenannte Punkt-zu-Punkt Verbindungen hergestellt, bei denen Ethernet-Datenpakete von einem Netzwerkknoten über eine Anzahl von Kopplungselementen an einen anderen Netzwerkknoten weitergeleitet werden.

Im Falle eines Netzwerkswitches ist im Switch eine sogenannte Quelladresstabelle (Source Address Table, SAT) implementiert. Empfängt der Netzwerkswitch ein Datenpaket, so speichert er die Adresse des Senders (MAC Adresse bei Ethernet) und den Port, an dem das Datenpaket empfangen wurde. Damit kann der Netzwerkswitch selbsttätig eine Zuordnung zwischen Adressen von Netzwerkknoten und Ports aufbauen. Das ermöglicht es dem Netzwerkswitch ein Datenpaket gezielt über den Port zu senden, über den gemäß der Quelladresstabelle ein Netzwerkknoten (bzw. seine Adresse) im Netzwerk erreichbar ist. Das muss nicht konfiguriert werden, sondern die Quelladresstabelle wird vom Netzwerkswitch selbsttätig aufgebaut und geführt. Ebenfalls automatisch altern Einträge aus dieser Tabelle nach einer gewissen Zeitspanne wieder heraus, wenn keine weiteren Frames von einem schon bekannten Netzwerkknoten mehr beobachtet werden. Netzwerkswitches mit automatischen Quelladresstabellen nennt man auch nicht-verwaltete Netzwerkswitches (unmanaged Switches).

Netzwerkknoten, die in der industriellen Automatisierung eingesetzt werden, haben oftmals intern einen 3-Port-Switch verbaut, wobei zwei Ports von außen zugänglich sind und der dritte Port zur internen Verschaltung dient. Damit lassen sich Linientopologien realisieren, in denen ein Netzwerkknoten mit dem jeweils nächsten Netzwerkknoten in Form einer Linie verbunden ist, was im industriellen Umfeld hilft, den Verkabelungsaufwand zu reduzieren. Selbstverständlich können aber auch externe Netzwerkswitches oder externe Netzwerkhubs zum Aufbau der Netzwerktopologie eingesetzt werden. Grundsätzlich ist jede Netzwerktopologie möglich, also insbesondere eine Sterntopologie, eine Linientopologie, eine Baumtopologie, eine Ringtopologie, usw. und auch beliebige Kombination daraus. Bei einer Ringtopologie sind in der Regel spezielle Vorkehrungen zu treffen, um das unkontrollierte Zirkulieren von Datenpaketen mit Mehrfachadresse (Multicast) zu verhindern. Üblich ist beispielsweise, dass ein Netzwerkknoten als Ringmaster bestimmt wird, über den kein Multicast-Verkehr weitergeleitet wird. Im IT-Umfeld haben sich Protokolle der sogenannten Spanning Tree Familie durchgesetzt, wo die Switches automatisch mehrfache Wege zu MAC-Adressen erkennen und in so einem Fall alle Wege bis auf einen nicht verwenden. Die möglichen Umschaltzeiten im Falle eines Ringbruchs bei diesen Protokollen sind für industrielle Anwendungen, insbesondere für Echtzeitanwendungen, allerdings nicht ausreichend klein.

Um Ethernet auch zur industriellen Automatisierung einsetzen zu können, wurden bereits echtzeitfähige Ethernet-Protokolle entwickelt, da das Standard Ethernet-Netzwerkprotokoll bekanntermaßen nicht echtzeitfähig ist. Beispiele bekannter echtzeitfähiger Ethernet-Protokolle sind Modbus/TCP, Ethernet/IP, ProfiNET IRT, EtherCAT oder Ethernet POWER-LINK, um nur einige zu nennen. In diesem Zusammenhang spricht man auch oftmals von Industrial Ethernet oder Real-Time Ethernet. Mit diesen echtzeitfähigen Ethernet-Protokollen soll eine für die jeweilige Anwendung ausreichend schnelle und deterministische Datenkommunikation sichergestellt werden. Es soll damit also insbesondere sichergestellt werden, dass ein echtzeitrelevantes Datenpaket innerhalb einer vorgegebenen Zeitspanne vom Sender über das Netzwerk zum Empfänger übertragen wird. In einer industriellen Automatisierungsumgebung bedeutet Echtzeitfähigkeit z.B., dass zwischen der Erfassung eines Messwertes, Weiterleitung an eine Regelungseinheit, Berechnung eines Stellwertes in der Regelungseinheit aufgrund des Messwertes und Übertragen des Stellwertes an einen Aktuator zur Durchführung einer Handlung eine fest vorgegebene Zeitspanne einzuhalten ist. Bezogen auf das echtzeitfähige Ethernet-Datennetzwerk zur Übertragung dieser Daten muss dabei ebenfalls eine vorgegebene Zeitspanne sichergestellt sein.

In einer industriellen Automatisierungsumgebung gibt es meist zumindest einen Master-Netzwerkknoten (in Folge auch kurz Master), der mit zumindest einem zugeordneten, in der Regel mehreren zugeordneten, Slave-Netzwerkknoten (in Folge auch kurz Slaves) kommuniziert. Zur Realisierung eines echtzeitfähigen Ethernet-Datennetzwerkes haben die bekannten echtzeitfähigen Ethernet-Netzwerkprotokolle eine vorgebbare Zykluszeit definiert, innerhalb der der Master normalerweise mit jedem Slave kommunizieren kann. Das umfasst zyklisch die Möglichkeit eines Datenpakets vom Master an jeden Slave und umgekehrt auch ein Datenpaket von jedem Slave an den zugeordneten Master. Die erreichbare und vorab ermittelbare minimale Zykluszeit ergibt sich aus der Summe der Laufzeiten der Datenpakete. Die Laufzeiten sind neben dem Einfluss des implementierten Kommunikationsprotokolls hardwareabhängig und ergeben sich aus den Bitübertragungszeiten (Länge, Payload) der Datenpakete, aus der Netzwerkinfrastruktur (Verzögerungszeiten durch Kopplungselemente) und der Netzwerktopologie. Dabei sind ebenfalls noch die oben genannten Grenzen in der Größe der Ethernet-Datenpakete zu beachten. Dieser zyklische Datenverkehr, der die Basis der Echtzeitfähigkeit im echtzeitfähigen Ethernet-Netzwerkprotokoll darstellt, wird in der Regel in jedem Sendezyklus durch asynchrone (nicht zyklische) Datenpakete erweitert. Solche asynchronen Datenpakete werden von der nicht den Echtzeitanforderungen unterworfenen Datenkommunikation genutzt, beispielsweise zur Konfiguration der Slaves oder für Statusabfragen. Für solche asynchronen Datenpakete wird Bandbreite reserviert, d.h., dass in jedem Sendezyklus eine gewisse, definierte Zeit für asynchronen Datenverkehr zur Verfügung steht. Diesen asynchronen Abschnitt eines Sendezyklus müssen sich die Netzwerkknoten aber aufteilen. In der konkreten Umsetzung des zyklischen und asynchronen Datenverkehrs unterscheiden sich die bekannten echtzeitfähigen Ethernet-Protokolle.

Im industriellen Umfeld, beispielsweise in der Automatisierungstechnik, wird oftmals auch eine Redundanz gefordert, die sicherstellt, dass das zugrunde liegende Datennetzwerk im Falle eines Fehlers, wie z.B. eines Kabelbruches oder eines defekten Netzwerkknotens, nicht ausfällt. Daher sind im industriellen Umfeld Ringtopologien aufgrund der Möglichkeit einer Netzwerkredundanz, da jeder Netzwerkknoten grundsätzlich über zwei verschiedene Wege erreichbar ist, besonders interessant. Wird das Netzwerk physisch an einer Stelle unterbrochen, z.B. durch einen Kabelbruch, Lösen einer Steckverbindung, etc., führt das nicht zwingend zum Ausfall des gesamten Datennetzwerkes bzw. auch nicht des Teil-Netzwerks "hinter" der Bruchstelle. Um den Datenverkehr im Netzwerk mit Ringtopologie auch im Falle eines Fehlers aufrechterhalten zu können, wurden bereits Verfahren bekannt, um mit solchen Fehlern umzugehen.

Es gibt bekannte Methoden, um mit Fehlern in der Netzwerktopologie umzugehen, wie z.B. das bekannte Spanning Tree Verfahren oder das Media Redundancy Protocol Verfahren. Nur sind diese Methoden, die nicht für die industrielle Anwendung, und schon gar nicht für echtzeitfähige Netzwerke, entworfen wurden, in der Regel viel zu langsam, sodass diese in solchen Anwendungen nicht eingesetzt werden können. Für die industrielle Anwendung wurden daher Verfahren entwickelt, die ein schnelles Neukonfigurieren des Datennetzwerkes ermöglichen.

Die bekanntesten internationale Standards, die Implementierungsanleitungen für Ringtopologien auf Basis von Ethernet beschreiben, sind in der IEC 62439 beschrieben, wie PRP (Parallel Redundancy Protocol) oder HSR (High-availability Seamless Redundancy). In beiden Fällen existieren zwei redundante Pfade zwischen Sender und Empfänger eines Datenpakets, wobei der Sender in der Lage sein muss, zwei speziell gekennzeichnete Datenpakete zu verschicken. Der Empfänger muss in der Lage sein, diese speziell gekennzeichneten Datenpakete zu empfangen und eines davon für die Weiterverarbeitung auszuwählen. Ein weiterer, ähnlich arbeitender Ansatz wurde kürzlich von der IEEE Arbeitsgruppe TSN standardisiert, IEEE 802.1CB. Der wesentliche Unterschied besteht darin, dass die beiden Endknoten (Sender und Empfänger) keine besonderen Fähigkeiten haben müssen, sondern die redundante Route dazwischen in den (entsprechenden) Switches konfiguriert wird. Ein Switch erzeugt die beiden entsprechend markierten Datenpakete und sendet sie auf zwei verschiedenen Ports weiter, während ein anderer Switch beide Datenpakete empfängt und ein unmarkiertes Datenpaket (entspricht dem originalen Datenpaket) weiterleitet. Dadurch können beliebige redundante Pfade pro Datenpaket bzw. pro Gerät definiert werden. Allen genannten Verfahren gemeinsam ist das Versenden von zumindest zwei unabhängigen Datenpaketen ohne Rekonfiguration des Netzwerks, die in hochoptimierten Netzen entsprechend Bandbreite konsumieren. Diese Verfahren sind daher insbesondere in echtzeitfähigen Datennetzwerken nur beschränkt einsetzbar.

Die folgenden bekannten Verfahren übertragen die Datenpakete nur einmal, wodurch die vorhandene Bandbreite effizienter genutzt wird. Sie unterscheiden sich im Wesentlich bei der Erkennung eines Ringbruchs und der folgenden Neukonfiguration der Pfade.

Die EP 1 476 988 B1 beschreibt beispielsweise eine Ringtopologie mit einem Netzwerkknoten, der als Redundanzmanager ausgeführt ist, der den Anfang und das Ende des Ringes verbindet. Der Redundanzmanager verhindert ein Weiterleiten von Datenpaketen und wirkt damit wie ein offener Schalter. Der Redundanzmanager sendet in regelmäßigen Abständen Testnachrichten in beide Richtungen in den Ring. Werden die beiden Testnachrichten innerhalb einer bestimmten Zeitspanne wieder vom Redundanzmanager empfangen, wird von der Fehlerfreiheit des physikalischen Netzwerkes ausgegangen. Falls nicht, kann angenommen werden, dass die Ringtopologie unterbrochen ist und der Redundanzmanager leitet ab diesem Zeitpunkt Datenpakete weiter (Schalter geschlossen), womit die unterbrochene Ringtopologie in eine funktionierende Linientopologie umgewandelt wird. Die Funktionalität des Redundanzmanager bedingt ein speziell dafür implementiertes Gerät, womit Standard Netzwerkgeräte nicht als Redundanzmanager in Frage kommen. Abgesehen davon muss der Redundanzmanager an einer bestimmten Stelle des Ringes angeordnet sein. Weiters wird das Netzwerk auch hier durch die Testnachrichten belastet, was die für die eigentliche Datenkommunikation verfügbare Bandbreite reduziert.

Aus der EP 1 062 787 B1 geht ein Verfahren hervor, bei dem der Redundanzmanager nach dem Auftreten eines Fehlers im physikalischen Netzwerk mit Ringtopologie ein Datenpaket an alle Netzwerkknoten sendet, mit dem der Fehler angezeigt wird. Daraufhin löschen alle Netzwerkknoten ihre Quelladresstabellen, womit sich das Netzwerk neukonfiguriert. Durch eine solche Neukonfiguration lernen die Netzwerkknoten wieder, auf welchem Port der Master erreichbar ist, womit die Datenkommunikation zwischen Master und Slaves schnell wiederhergestellt werden kann. Durch die Neukonfiguration sind wieder alle Netzwerkknoten in der Ringtopologie erreichbar. Bei diesem Verfahren müssen alle Netzwerkknoten Zugriff auf ihre Quelladresstabelle haben, was wiederum speziell ausgeführte Geräte bedingt, womit im Ring ebenfalls keine Standard Netzwerkgeräte eingesetzt werden können.

Insbesondere in hochoptimierten industriellen Ethernet-basierten Datennetzwerken ist aber oftmals auch sogenannter Querverkehr realisiert. Dabei kommunizieren zwei Slaves direkt, also ohne Einbeziehung des Masters, miteinander, womit die Geschwindigkeit der Datenkommunikation erheblich gesteigert werden kann. Im Falle eines Fehlers in der Netzwerktopologie (Kabelbruch, Lösen eines Steckers, defekter Netzwerkknoten, etc.) wird der Querverkehr über die Fehlerstelle unterbrochen. Auf direkten Querverkehr zwischen zwei Slaves und auf die schnelle Neukonfiguration des Querverkehrs geht der genannten Stand der Technik überhaupt nicht ein.

Es ist daher eine Aufgabe der gegenständlichen Erfindung, ein Verfahren anzugeben, mit dem direkter Querverkehr zwischen Slaves in einer Ringtopologie des echtzeitfähigen Datennetzwerkes auch im Falle eines Fehlers in der Ringtopologie, der zur Unterbrechung der Ringtopologie führt, aufrecht erhalten werden kann.

Diese Aufgabe wird erfindungsgemäß dadurch gelöst, dass im Falle des Auftretens eines Fehlers, oder im Falle des Aufhebens eines Fehlers, im ringförmigen echtzeitfähigen Datennetzwerk der Ringmaster zum Weiterleiten, oder Blockieren, von Datenpaketen bzw. zumindest Multicast-Datenpaketen konfiguriert wird und der Master die zumindest zwei über Querverkehr miteinander kommunizierenden Slaves auffordert, an die jeweils anderen Slaves des ringförmigen echtzeitfähigen Datennetzwerkes Konfigurations-Datenpakete als Mulitcast-Datenpakete zu versenden, um Adresstabellen in den zumindest zwei über Querverkehr miteinander kommunizierenden Slaves anzupassen. Weiters wird die Aufgabe gelöst, indem der Ringmaster konfiguriert ist, um im Falle des Auftretens eines Fehlers im ringförmigen echtzeitfähigen Datennetzwerk von Datenpaketen weiterzuleiten und die zumindest zwei über Querverkehr miteinander kommunizierenden Slaves aufzufordern, an die jeweils anderen Slaves des ringförmigen echtzeitfähigen Datennetzwerkes Konfigurations-Datenpakete als Multicast-Datenpakete zu versenden, um Adresstabellen in den zumindest zwei über Querverkehr miteinander kommunizierenden Slaves anzupassen.

Das erfindungsgemäße Verfahren stellt keinerlei Anforderungen an die verwendete Hardware, sondern baut einzig auf die Standardfunktionalität eines Netzwerkswitches auf. Damit können Standard Netzwerkkomponenten, insbesondere Standard nicht-verwaltete Netzwerkswitches verwendet werden. Das Umschreiben der Adresstabellen erfolgt damit automatisch. Der Ringmaster ist lediglich eine Funktion, die in der Steuersoftware aktiviert werden muss. Zur Umsetzung ist das Kommunikationsprotokoll entsprechend zu definieren, damit die benötigten Nachrichten versendet und erkannt werden können. Mit dem erfindungsgemäßen Verfahren lassen sich extrem kurze Umschaltzeiten im Bereich von einigen 100µs bis wenigen Millisekunden im Falle eins Ringbruches realisieren, womit das Verfahren insbesondere auch in Echtzeitnetzwerken einsetzbar ist.

Wenn der Master in beide Zweige des ringförmigen Datennetzwerks Multicast-Datenpakete an alle im Ring vorhandenen Slaves versendet, kann auf einfach Weise eine Neukonfiguration aller Slaves im Datennetzwerk erreicht werden. Das führt dazu, dass nach dem Beginn, oder dem Ende, des Weiterleitens der Datenpakete durch den Ringmaster (RM) die Adresstabellen der Slaves automatisch angepasst werden und damit der Verkehr zwischen den Slaves und dem Master ohne weitere Verluste oder notwendige Konfiguration aufrecht erhalten werden kann.

Ein Fehler kann auf einfache Weise erkannt werden, wenn vom Master in zeitlichen Abständen in beide Zweige des ringförmigen Datennetzwerks Ringstatus-Datenpakete als Multicast-Datenpakete versendet werden, die vom Ringmaster empfangen werden und der Ringmaster einen Fehler im ringförmigen Datennetzwerk detektiert, wenn die Ringstatus-Datenpakete ein- oder mehrmals hintereinander aus nur einem Zweig empfangen werden oder der Ringmaster das Beheben eines Fehlers im ringförmigen Datennetzwerk detektiert, wenn die Ringstatus-Datenpakete ein- oder mehrmals hintereinander aus beiden Zweigen empfangen werden. Ein solches Ringstatus-Datenpaket kann einfach im Kommunikations protokoll implementiert werden. Diese Ringstatus-Datenpakete können gleichzeitig auch als Multicast-Datenpakete zur Neukonfiguration der Datenkommunikation zwischen Master und Slaves verwendet werden.

Dabei ist es ganz besonders vorteilhaft, wenn als Ringstatus-Datenpakete im Kommunikationsprotokoll der Datenkommunikation ohnehin vorgesehene Multicast-Datenpakete verwendet werden. Wird auf ohnehin vorhandene und versendete Datenpakete aufgebaut, sind keine zusätzlichen Datenpakte notwendig, die die Bandbreite für die normale Datenkommunikation reduzieren.

Der Ringmaster kann auf einfach Weise den Master über einen Fehler benachrichtigen, wenn der Ringmaster ein Fehler-Datenpaket an den Master sendet.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt
Fig.1 ein ringförmiges Datennetzwerk mit Master und Ringmaster,
Fig.2 mögliche Ausführungen eines Netzwerkknotens mit Netzwerkswitch,
Fig.3 das ringförmige Datennetzwerk mit Fehler,
Fig.4 das Benachrichtigen des Masters im Falle des Fehlers im ringförmige Datennetzwerk,
Fig.5 das Umkonfigurieren des Querverkehrs durch das Versenden von Querverkehr-Datenpakete und
Fig.6 eine Netzwerktopologie mit Netzwerkswitch, an den ein Master und mehrere ringförmige Datennetzwerke angeschossen sind.

In einem echtzeitfähigen Ethernet-Netzwerkprotokoll sind Sendezyklen mit vorgegebener Zykluszeit definiert, in denen der Master mit jedem Slave S1, ..., Sn normalerweise einmal kommunizieren kann. Ein Sendezyklus ist dabei zeitlich genau eingeteilt, indem die Zeitpunkte festgelegt sind, zu denen der Master M oder die Slaves S1, ..., Sn Datenpakete DP versenden dürfen. Damit können Datenkollisionen (bzw. Verzögerungen durch anwachsende Switchqueues) am Datennetzwerk 1 vermieden werden. Damit weiß jeder der beteiligten Netzwerkknoten (Master M, Slaves S1, ..., Sn), zu welcher Zeit innerhalb eines Sendezyklus Z er Datenpakete DP versenden darf. Nachdem Ethernet eine Vollduplex-Datenkommunikation erlaubt, können aber auf einem Netzwerkabschnitt gleichzeitig Datenpakte DP in beiden Richtungen unterwegs sein. Die echtzeitbasierte Datenkommunikation findet zyklisch statt und es ist in jedem Sendezyklus ein zeitlicher Bereich für diesen zyklischen (isochronen) Datenverkehr vorgesehen. Die Anzahl der Netzwerkknoten, Master M und Slaves S1, ..., Sn, und die Größe der versendeten Daten ist damit auch mitbestimmend für die erzielbare Zykluszeit. In jedem Sendezyklus ist aber auch ein Bereich für asynchronen Datenverkehr reserviert. Der asynchrone Datenverkehr dient in erster Linie dem Datenverkehr, der keiner Echtzeitanforderung unterliegt und die im Datennetzwerk 1 vorhandenen Netzwerkknoten müssen sich die asynchrone Bandbreite nach einem implementierten Schema aufteilen.

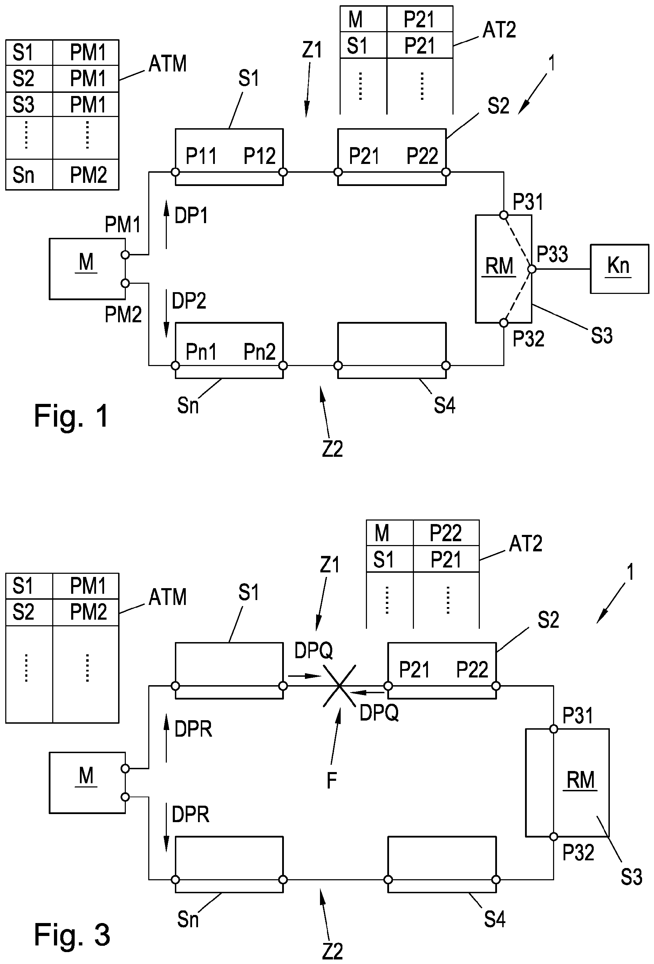

Mit Fig.1 wird vereinfacht ein ringförmiges Datennetzwerk 1 dargestellt. Der Master M ist über die Slaves S1, ..., Sn ringförmig mit diesen verbunden. Dazu ist der Master M mit beiden Zweigen Z1, Z2 des ringförmigen Datennetzwerkes 1 verbunden und die Enden der beiden Zweige Z1, Z2 werden über einen Slave S3, der als Ringmaster RM vorgesehen ist, miteinander verbunden. Die Verbindung ist in Fig.1 jeweils durch eine Verbindung zwischen den Ports P11, P12 bzw. P21, P22, usw. der Slaves S1, ..., Sn angedeutet. Der Slave S3 dient als Ringmaster RM, der in einem fehlerfreien ringförmigen Datennetzwerk 1 so konfiguriert ist, dass keine Datenpakete aus einem Zweig Z1, Z2 in den jeweils anderen Zweig Z2, Z1 übertragen werden. Das ist in Fig.1 durch die nicht verbundenen Ports P31, P32 angedeutet.

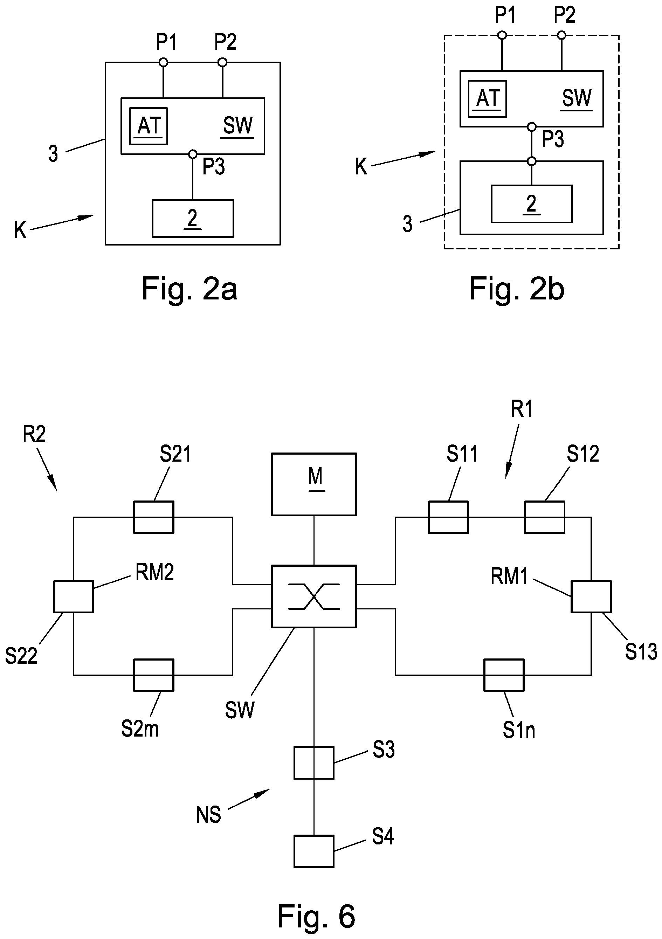

Ein Netzwerkknoten K (Master M oder Slave S) ist ein Netzwerkgerät 3 mit Netzwerkswitch SW, der intern im Netzwerkgerät 3 verbaut sein kann, beispielsweise als 3-Port Netzwerkswitch wie in Fig.2a. Ebenso ist es denkbar, dass ein Netzwerkgerät 3 mit einem externen Netzwerkswitch SW verbunden wird, um den Netzwerkknoten K zu bilden, wie in Fig.2b dargestellt. Für die gegenständliche Erfindung sind beide Realisierungen eines Netzwercknotens K denkbar, weshalb in weitere Folge nicht mehr auf diesen Hardwareunterschied eingegangen wird, sondern davon ausgegangen wird, dass der Master M und die Slaves S1, ..., Sn jeweils mit einem Netzwerkswitch SW ausgestattet sind. Für ein ringförmiges Datennetzwerk 1 muss der Netzwerkswitch SW zumindest zwei extern zugängliche Ports P1, P2 aufweisen. Ein dritter Port P3 des Netzwerkswitches SW ist oftmals intern mit einer Steuereinheit 2 des Netzwerkknotens K verbunden. In den Netzwerkswitches SW, oder allgemein im Netzwerkknoten K, ist in bekannter Weise auch eine Adresstabelle AT implementiert, aus der der Netzwerkswitch SW die Information entnimmt, über welchen der externen Ports P1, P2 ein anderer Netzwerknoten des verbundenen Datennetzwerkes erreichbar ist.

Ein Netzwerkknoten K kann aber auch zusätzliche externe Ports P33 aufweisen, wie in Fig.1 am Slave S3 angedeutet, an denen weitere Netzwerkknoten Kn angeschlossen werden können. Diese weiteren Netzwerknoten Kn werden aber nicht als Teil des ringförmigen Datennetzwerkes 1 angesehen. Allerdings kann ein solcher weiterer externer Port P33 aus beiden Zweigen Z1, Z2 erreichbar sein, was durch die strichlierte Verbindung in Fig.1, die nicht den Ring schließt, angedeutet wird.

Im Zuge der Datenkommunikation auf dem ringförmigen Datennetzwerk 1 werden oftmals auch sogenannten Multicast-Datenpakete versendet, bei denen ein Netzwerkknoten (Master M, Slaves S1, ..., Sn) ein Datenpaket an mehrere andere Netzwerkknoten im ringförmigen Datennetzwerk 1 versendet. Ein solches Multicast-Datenpaket wird dabei an einem Port des Netzwerkknotens empfangen und am anderen Port, oder an den anderen Ports, wieder versendet. Um das unkontrollierte Zirkulieren solcher Multicast-Datenpakete im ringförmigen Datennetzwerk 1 zu unterbinden, ist der Ringmaster RM bei intaktem ringförmigen Datennetzwerk 1 so konfiguriert, dass er zumindest keine Multicast-Datenpakete weiterleitet. Vorzugsweise ist der Ringmaster RM bei intaktem ringförmigen Datennetzwerk 1 so konfiguriert, dass er überhaupt keine Datenpakete weiterleitet, also auch keine Unicast-Datenpakete.

Im Rahmen der Datenkommunikation bei intaktem ringförmigen Datennetzwerk 1 sendet der Master M beispielsweise Datenpakete DP1, DP2 in beide Zweige Z1, Z2 des Datennetzwerkes 1 in Ringtopologie. Die Datenpakete DP1, DP2 werden entweder an genau einen der Slaves S1, ..., Sn gesendet (Unicast Verkehr) oder an mehrere oder sogar alle Slaves S1, ..., Sn, bzw. mehrere oder sogar alle Slaves S1, ..., Sn eines Zweiges Z1, Z2 (Multicast Verkehr). Im Multicast Verkehr können die Datenpakete DP1 und DP2 auch gleich sein. Die Slaves S1, ..., Sn senden entsprechend des implementierten Kommunikationsprotokolls jeweils Datenpakete gemäß dem Kommunikationsprotokoll an den Master M zurück.

Als Ringmaster RM wird idealerweise ein Slave in der Mitte des Ringes gewählt, also ein Slave der in beiden Zweigen Z1, Z2 in etwa gleich weit vom Master M entfernt ist, um in etwa gleiche Übertragungszeiten in beiden Zweigen Z1, Z2 zu erreichen.

Im Falle eines Fehlers F, wie in Fig.3 dargestellt, ist das ringförmige Datennetzwerk 1 an der Fehlerstelle unterbrochen. Ein Fehler F kann vom Ringmaster RM erkannt werden, indem der Master M in regelmäßigen Abständen ein bestimmtes Ringstatus-Datenpaket DPR als Multicast-Datenpaket an alle Slaves S1, ..., Sn sendet. Der Ringmaster RM kann daher erkennen, ob das Eingehen dieses Ringstatus-Datenpakets DPR an einem seiner Ports P31, P32 ausbleibt und kann in diesem Fall auf einen Fehler F im jeweiligen Zweig Z1, Z2 schließen. Es lässt sich im Ringmaster RM natürlich konfigurieren, wie oft das hintereinander folgende Ausbleiben des Ringstatus-Datenpakets DPR detektiert werden muss, bis von einem Fehler im ringförmigen Datennetzwerk 1 ausgegangen wird. In fehleranfälligen Datennetzwerken 1, beispielsweise mit fehleranfälligen Übertragungsstrecken wie Schleifringe, WLAN Strecken, etc., wird vorzugsweise ein höherer Wert angesetzt werden.

Um die Datenkommunikation durch das Versenden der Ringstatus-Datenpakete DPR nicht zusätzlich zu belasten, kann auch vorgesehen sein, dass ohnehin im Kommunikationsprotokoll vorgesehene Datenpakete zu diesem Zweck genutzt werden. Das Kommunikationsprotokoll kann beispielsweise Multicast-Datenpakete vom Master M an die Slaves S1, ..., Sn beinhalten, die in bestimmten oder in allen Sendezyklen, vorzugsweise im zyklischen Teil des Sendezyklus, versendet werden. Der Ringmaster RM kann daher das Eingehen dieser Multicast-Datenpakete erwarten und bei ein- oder mehrmaligem Ausbleiben von einem Fehler F im Zweig Z1, Z2, aus dem kein Datenpaket eingeht, ausgehen. Der zusätzliche Vorteil bei Verwendung solcher Multicast-Datenpakete vom Master M als Ringstatus-Datenpakets DPR liegt darin, dass bei Fehlererkennung die bisher offene Verbindung im Ringmaster RM sofort geschlossen werden kann, womit die Multicast-Datenpakete des Masters über den Ringmaster RM weitergeleitet werden können. Damit konfigurieren sich die Adresstabellen der hinter dem Ringmaster RM angeschlossenen Slaves (zum Master) automatisch neu, ohne weitere Maßnahmen setzen zu müssen.

Solche Multicast-Datenpakete vom Master M an die Slaves S1, ..., Sn beinhalten in der Regel auch Daten vom Master M an die Slaves S1, ..., Sn. Damit wird gleichzeitig sichergestellt, dass die Daten auch im Falle eines Ringbruches alle Slaves S1, ..., Sn erreichen und alle Slaves S1, ..., Sn ihre Daten im selben Sendezyklus, in dem umgeschaltet wird, erhalten. Datenverlust oder Verzögerung durch erneutes Senden der Daten kann so vermieden werden.

Das Verfahren zur Erkennung eines Fehlers F kann natürlich auch umgedreht werden. In diesem Fall kann der Ringmaster RM konfiguriert sein, in regelmäßigen Abständen ein Ringstatus-Datenpaket DPR über beide Zweige Z1, Z2 an den Master M zu senden. Dieser kann bei x-maligem Ausbleiben des Ringstatus-Datenpakets DPR wieder auf einen Fehler F im jeweiligen Zweig Z1, Z2 schließen.

Der Master M kann einen Fehler aber auch ohne ein eigenes Ringstatus-Datenpaket DPR erkennen. Dazu kann der Master M wiederum ohnehin im Kommunikationsprotokoll vorgesehene Datenpakete nutzen. Sendet beispielswiese ein oder jeder Slave S1, ..., Sn in jedem Sendezyklus ein Datenpaket an dem Master M, kann der Master M beim Ausbleiben dieser Datenpakete auf einen Fehler F schließen. Erhält der Master M normalerweise von jedem Slave S1, ..., Sn ein Datenpaket kann der Master sogar aufgrund der fehlenden Datenpakete auf eine genaue Fehlerstelle schließen, wenn der Master M die Topologie des Datennetzwerkes 1 kennt (was normalerweise der Fall ist).

Hier ist anzumerken, dass oftmals auch auf der physikalischen Schicht eines Netzwerkgerätes eine Linkerkennung implementiert ist, wie das beispielsweise bei Ethernet der Fall ist. Diese Linkerkennung ist allerdings nicht zuverlässig genug, da es vorkommen kann, dass ein verlorener Link (z.B. durch einen Adernbruch im Netzwerkkabel) nicht erkannt wird. Abgesehen davon wäre diese Linkerkennung auch nicht ausreichend schnell, da beispielsweise bei Ethernet alle 16ms ein Puls gesendet wird und der Puls auf der Empfängerseite mehrmals hintereinander ausfallen müsste, damit die Linkerkennung anspricht.

Nachdem der Ringmaster RM oder der Master M auf diese, oder eine andere, geeignete Weise einen Fehler F im Datennetzwerk 1 detektiert hat, wird die Verbindung zwischen den Ports P31, 32 des Ringmasters RM geschlossen (Fig.3), womit nunmehr Datenkommunikation (sowohl als Unicast, als auch als Multicast) über den Ringmaster RM ermöglicht wird. Gleichzeitig wird ein Verfahren zur Neukonfigurierung des Datennetzwerkes 1 angestoßen, z.B. ähnlich wie im eingangs beschrieben Stand der Technik.

Wenn der Master M zur Neukonfiguration Multicast-Datenpakete an die Slaves S1, ..., Sn sendet, erfolgt die Neukonfiguration durch die Standard Ethernetfunktionalität automatisch, ohne dass ein spezielles Verfahren zur Neukonfiguration notwendig wäre oder spezielle Hardware-Anforderungen an die Slaves S1, ..., Sn gestellt würden. Solche Multicast-Datenpakete können in zeitlichen Abständen oder auch nur einmalig gesendet werden. Beispielsweise könnten die Ringstatus-Datenpaket DPR auch dafür verwendet werden.

Durch die Neukonfiguration (egal nach welchem Verfahren) ist wieder jeder Slave S1, ..., Sn vom Master M erreichbar bzw. jeder Slave S1, ..., Sn kann den Master M erreichen. Im Zuge dieser Neukonfiguration werden die Adresstabellen AT1, ..., ATn der Slaves S1, ..., Sn und die Adresstabelle ATM Masters M entsprechend umgeschrieben, was am Beispiel der Adresstabelle ATM des Masters M erläutert wird.

In Fig.1 ist die Adresstabelle ATM des Masters M gezeigt, in der enthalten ist, über welchen Port PM1, PM2 des Masters M jeder Slave S1, ..., Sn des ringförmigen Datennetzwerkes 1 erreichbar ist. Im Zuge der Neukonfiguration im Falle eines Fehlers F wird die Adresstabelle ATM des Masters M umgeschrieben, sodass in der Adresstabelle ATM nunmehr enthalten ist, dass der Slave S2 nicht mehr über den Port PM1 erreichbar ist, sondern über den Port PM2 (Fig.3). In gleicher Weise werden durch die Neukonfiguration die Adresstabellen AT1,..., ATn der Slaves S1, ..., Sn umgeschrieben. Beispielsweise sendet dann der Slave S2 Datenpakete DP an den Master M nicht mehr über den Port P21, sondern über den Port P22. Der normale Datenverkehr zwischen Master M und Slaves S1, ..., Sn kann auf diese Weise rasch neu geordnet werden. Hierzu ist an sich ein beliebiges Verfahren für die Neukonfiguration der Datenkommunikation zwischen Master M und den Slaves S1, ..., Sn anwendbar.

Es kann im ringförmigen Datennetzwerk 1 aber auch direkter Querverkehr zwischen Slaves S1, ..., Sn implementiert sein. Querverkehr bedeutet dabei, dass zwei Slaves direkt miteinander ohne Einbeziehen des Masters M über das Datennetzwerk 1 kommunizieren, indem diese untereinander Querverkehrs-Datenpakete DPQ austauschen. Beispielsweise kann vorgesehen sein, dass die Slaves S1, S2 direkt miteinander, ohne Einbeziehen des Masters M Querverkehrs-Datenpakete DPQ austauschen, wie in Fig.3 angedeutet. Die Slaves S1, ..., Sn, die über Querverkehr direkt miteinander kommunizieren, müssen dabei nicht unmittelbar benachbart sein, sondern der Querverkehr könnte auch über mehrere Slaves S1, ..., Sn hinweg implementiert sein. Der Querverkehr ist ebenfalls durch entsprechende Einträge in den Adresstabellen AT der am Querverkehr beteiligten Slaves S1, S2 konfiguriert, wie in den Adresstabellen AT2 des Slaves S2 angedeutet.

Dieser Querverkehr erlaubt den beteiligten Slaves innerhalb eines Sendezyklus und unabhängig von der restlichen Datenkommunikation (mit Ausnahme der Vermeidung von Kollisionen bzw. allfälligen Verzögerungen durch Switchqueues am Datennetzwerk) mittels Austausch von Datenpaketen direkt miteinander zu kommunizieren. Das ermöglicht sehr schnelle Reaktionen eines am Querverkehr beteiligten Slaves S1, S2, was insbesondere in hochdynamischen, synchronisierten Regelungen von Maschinen sehr interessant ist. Beispielsweise kann in einer Antriebssteuerung direkter Querverkehr zwischen einem Sensor (beispielsweise ein Drehzahlsensor) und einer Motorsteuerung eines Elektromotors vorgesehen sein, womit der Antrieb mit einer sehr kurzen Abtastzeit (entspricht der Zeit eines Sendezyklus) betrieben werden könnte. Wäre die Kommunikation über den Master notwendig, dann wäre die mögliche Abtastzeit durch die längeren Kommunikationswege entsprechend länger.

Durch die oben beschriebene Neukonfiguration des Datennetzwerkes 1 im Zuge eines Fehlers F würde aber dieser Querverkehr über die Fehlerstelle unterbrochen werden.

Werden durch die Neukonfiguration nur die Teile der Adresstabellen AT1,..., ATn der Slaves S1, ..., Sn neu geschrieben, die den Datenverkehr mit dem Master M betreffen, bleiben Einträge in den Adresstabellen AT1,..., ATn übrig, die einen Querverkehr verhindern würden. Bleibt z.B. in der Adresstabelle AT2 der Eintrag über, dass der Slave S1 vom Slave S2 aus über den Port P21 erreichbar ist (wie in Fig.3), dann würde der Slave S2 erfolglos versuchen, Querverkehrs-Datenpakete DPQ über diesen Port P21 an den Slave S1 zu senden, da zwischen den Slaves S1, S2 der Fehler F vorliegt. Das gleiche kann passieren, wenn im Zuge der Neukonfiguration die gesamten Adresstabellen AT1,..., ATn gelöscht werden, womit auch die Einträge für den direkten Querverkehr gelöscht werden. Diese für den Querverkehr benötigten Einträge werden durch die Neukonfiguration nach dem Stand der Technik aber nicht wieder geschrieben, was ebenfalls den direkten Querverkehr über die Fehlerstelle unterbinden würde.

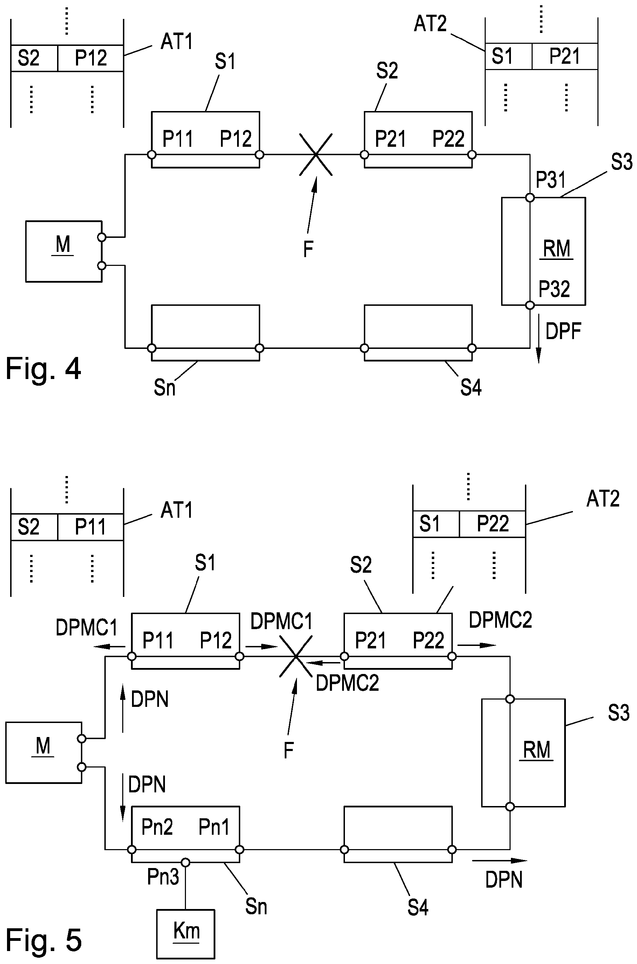

Um dieses Problem zu umgehen, ist nun erfindungsgemäß vorgesehen, dass der Ringmaster RM im Falle des Erkennens eines Fehlers F im ringförmigen Datennetzwerk 1 über den intakten Zweig Z2 des ringförmigen Datennetzwerkes 1 ein Fehler-Datenpaket DPF an den Master M sendet (Fig.4), um den Master M vom Fehler F zu benachrichtigen. Falls der Fehler F im Master M detektiert wird, kann der Master M das Fehler-Datenpaket DPF an den Ringmaster RM übermitteln, womit dieser die Datenkommunikationsverbindung über seine Ports P31, P32 schließen kann, wie oben beschrieben. Die Bandbreite für das Fehler-Datenpaket DPF kann fest im Sendezyklus, vorzugsweise im isochronen Teil des Sendezyklus, eingeplant sein, um die Benachrichtig ohne Warten auf einen freien Sendeplatz ehest möglich absetzen zu können.

Grundsätzlich ist das erfindungsgemäße Verfahren zur Neukonfiguration des direkten Querverkehrs zwischen zwei Slaves S1, ..., Sn aber unabhängig von der Art und Weise wie ein Fehler F im ringförmigen Datennetzwerk 1 detektiert wird.

Nachdem ein Fehler F im ringförmigen Datennetzwerk 1 erkannt wurde und der Master M davon Kenntnis erlangt hat, sendet der Master M an alle Slaves S1, ..., Sn ein Start-Datenpaket DPN (Fig.5), mit dem alle Slaves S1, ..., Sn des ringförmigen Datennetzwerkes 1 aufgefordert werden, ein Konfigurations-Datenpaket DPMC in Form eines Mulitcast-Datenpaktes an jeweils alle anderen Slaves S1, ..., Sn zu senden (Fig.5). Das bedeutet, dass jeder Slave S1, ..., Sn das Konfigurations-Datenpaket DPMC über alle Ports P versendet, die in das ringförmige Datennetzwerk 1 eingebunden sind. Beispielsweise sendet der Slave S2 sein Konfigurations-Datenpaket DPMC2 über die Ports P21, P22. An einem Slave S1, ..., Sn könnten noch zusätzliche, nicht im ringförmigen Datennetzwerk 1 eingebundene Ports P vorgesehen sein, über die anderen Netzwerkknoten Km angeschlossen sind. Der Slave Sn in Fig.5 hat beispielsweise einen zusätzlichen externen Port Pn3, über den ein weiteres Netzwerkknoten Km angeschossen ist. Für das erfindungsgemäße Verfahren ist es nicht erforderlich, dass ein Konfigurations-Datenpaket DPMCn auch über solche nicht in das ringförmige Datennetzwerk 1 eingebundene Ports P versendet wird.

Wenn der Master M Kenntnis von der Konfiguration des Querverkehrs hat, wenn der Master M also weiß welche der Slaves S1, ..., Sn für Querverkehr untereinander konfiguriert sind, dann ist es auch ausreichend, wenn der Master das Start-Datenpaket DPN nur an die an Querverkehr beteiligten Slaves S1, ..., Sn sendet. Damit würden auch nur die an Querverkehr beteiligten Slaves S1, ..., Sn ein Konfigurations-Datenpaket DPMC versenden.

Um Konfigurations-Datenpakete DPMC in Form von Multicast-Datenpaketen zu ermöglichen, muss der Ringmaster RM Multicast-Datenpakete von Slaves S1, ..., Sn im Fehlerfall weiterleiten. Der Ringmaster RM muss daher diese für den intakten Ring notwendige Beschränkung im Fehlerfall aufheben. Durch den Fehler F (Ringbruch) wird dabei aber sichergestellt, dass diese Multicast-Datenpakete DPMC nicht unkontrolliert zirkulieren können. Der Slave S1 erhält damit über den Port P11 das Konfigurations-Datenpaket DPMC2 des Slaves S2 (Fig.5). Über die Standardmechanismen eines nicht-verwalteten Netzwerkswitches wird die Adresstabelle AT1 im Slave S1 automatisch umgeschrieben, wenn der Slave S1 ein Datenpaket eines anderen Slaves S2 über einen anderen Port P11 erhält, als der, der in der Adresstabelle AT1 vermerkt ist. Der Slave S1 weiß durch dieses automatische Umschreiben der Adresstabelle AT1 nun, dass der Slave S2 nicht wie bisher über den Port P12, sondern über den Port P11 erreichbar ist. In gleicher Weise wird aufgrund des Konfigurations-Datenpakets DPMC1 des Slaves S1 die Adresstabelle des Slaves S2 umgeschrieben, sodass auch der Slave S2 weiß, dass der Slave S1 über den Port P22 erreichbar ist. Damit kann der Querverkehr über die Fehlerstelle F umgegangen werden und der Querverkehr zwischen den Slaves S1, S2 erfolgt über die intakten Verbindungen des ringförmigen Datennetzwerkes 1. Dazu ist in der Regel kein Eingriff in die Funktionalität der Netzwerkswitches der Slaves S1, ..., Sn erforderlich, da dieses Umschreiben der Adresstabellen AT eine Standardfunktion eines Netzwerkswitches ist. Das Umschreiben der Adresstabellen AT und damit auch die Neukonfiguration des Querverkehrs erfolgt damit automatisch.

Wird der Fehler F behoben, wird ähnlich vorgegangen. Der Ringmaster RM oder der Master M erkennt beispielsweise, dass wieder aus beiden Zweigen Z1, Z2 Ringstatus-Datenpakete DPR eintreffen, was nur möglich ist, wenn die Fehlerstelle behoben ist. Der Ringmaster RM informiert den Master M (oder umgekehrt) darüber, dass der Fehler F aufgehoben ist, beispielswiese wieder durch ein Fehler-Datenpaket DPF. Ab dem Erkennen des Aufhebens des Fehlers F unterbindet der Ringmaster RM zumindest wieder das Weiterleiten von Multicast-Datenpaket der Slaves S1, ..., Sn, um ein unkontrolliertes Zirkulieren solcher Datenpakete im Ring zu verhindern. Vorzugsweise unterbindet der Ringmaster RM das Weiterleiten aller Datenpakete. Der Master M fordert über ein Start-Datenpaket DPN wieder alle Slaves S1, ..., Sn, oder vorteilhaft zumindest die am Querverkehr beteiligten Slaves S1, S2, auf, an jeden anderen Slave S1, ..., Sn ein Konfigurations-Datenpaket DPMC zu senden. Diese Konfigurations-Datenpakete DPMC als Multicasts werden nicht über den Ringmaster RM weitergeleitet. Damit würde im Beispiel nach Fig.5 bei behobenen Fehler F am Slave S1 über den Port P12 das Konfigurations-Datenpaket DPMC2 eintreffen, was zum Umschreiben der Adresstabelle AT1 führen würde. Gleiches würde mit der Adresstabelle AT2 des Slaves S2 passieren, die aufgrund eines Konfigurations-Datenpaket DPMC1 des Slaves S1 umgeschrieben werden würde. Damit würde der Querverkehr zwischen Slave S1 und Slave S2 wieder über den kurzen direkten Weg über die Ports P12 und P21 erfolgen.

Das Start-Datenpaket DPN wird vorzugsweise als Multicast-Datenpaket gesendet. D.h., dass ein Slave S1, ..., Sn das Start-Datenpaket DPN an einem Port entgegennimmt und über den oder die anderen Port(s) versendet. Alternativ könnte der Master M aber auch einzelne Start-Datenpakete DPN an Slaves S1, ..., Sn senden, was aber mehr Bandbreite der Datenkommunikation in Anspruch nehmen würde.

Es ist auch möglich, bei intaktem Ring R, also ohne Fehler F, Querverkehr über den Ringmaster RM auszuschließen. Der Grund liegt darin, dass ein solcher Querverkehr, z.B. zwischen den Slaves S2 und S4, zwar konfiguriert werden könnte, aber nicht aufrechterhalten werden kann. Die Konfiguration kann dabei mittels eines Konfigurationstools beim Einrichten des Datennetzwerkes 1 erfolgen. Der Ringmaster RM könnte aber auch Querverkehr in Form von Datenpaketen fälschen, um die Adresstabellen AT2, AT4 der Slaves S2, S4 entsprechend umzuschreiben. Nur kann die Konfiguration von Querverkehr über den Ringmaster RM nur so lange aufrechterhalten werden, bis einer der beteiligten Slaves S2, S4 Multicast-Datenpakete versendet, was oft vorkommen kann. Nachdem der Ringmaster RM im intakten Ring R solche Multicast-Datenpakete blockiert, würde das Multicast-Datenpaket den anderen Slave über den langen Weg erreichen, womit die Adresstabellen AT2, AT4 wieder umgeschrieben werden würden. Daher ist es sinnvoll, Querverkehr über den Ringmaster RM gänzlich auszuschließen.

Die Neukonfiguration der normalen Datenkommunikation (also nicht des direkten Querverkehrs zwischen S1, ..., Sn) nach Beheben des Fehlers könnte wiederum mit herkömmlichen Methoden durchgeführt werden. Der Master M könnte aber zur Neukonfiguration wiederum Multicast-Datenpakete an die Slaves S1, ..., Sn senden, womit die Neukonfiguration durch die Standard Ethernetfunktionalität automatisch erfolgen würde, ohne dass ein spezielles Verfahren zur Neukonfiguration notwendig wäre oder spezielle Hardware-Anforderungen an die Slaves S1, ..., Sn gestellt würden. Solche Multicast-Konfigurations-Datenpakete können in zeitlichen Abständen oder auch nur einmalig gesendet werden. Beispielsweise könnten die Ringstatus-Datenpaket DPR auch dafür verwendet werden.

Der Master M könnte natürlich ebenfalls über einen externen Netzwerkswitch SW in die Ringtopologie eingebunden sein, wie anhand von Fig.6 beschrieben wird. Hier ist ein Netzwerkswitch SW vorgesehen, der mit dem Master M verbunden ist. Am Netzwerkswitch SW ist ein erster Ring R1 in Form eines ringförmigen Datennetzwerkes 1 mit einer Anzahl von Slaves S11, ..., S1n und ein zweiter Ring R2 in Form eines ringförmigen Datennetzwerkes 1 mit einer zweiten Anzahl von Slaves S21, ..., S2m angeschlossen. Zusätzlich können am Netzwerkswitch SW auch noch andere Netzwerksegmente NS angeschlossen sein, wie in Fig.5 ein linienförmiges Netzwerksegment mit zwei Slaves S3, S4. Auf diese Weise können mit einem Master M auch mehrere ringförmige Datennetzwerke 1 bedient werden. Am grundsätzlichen Verfahren wie mit einem Fehler F umgegangen wird, ändert das aber nichts und jeder der Ringe R1, ... benötigt einen Slave mit Ringmasterfunktion.

Ebenso ist es denkbar, dass die Funktion des Ringmasters RM vom Master M übernommen wird. In diesem Fall würde das Fehler-Datenpaket DPF nicht über das ringförmige Datennetzwerk 1 versendet, sondern intern im Master M signalisiert. Am grundsätzlichen Ablauf der Neukonfiguration des Querverkehrs ändert das nichts.

Weiters ist nochmals hervorzuheben, dass das erfindungsgemäße Verfahren zur Neukonfiguration des Querverkehrs unabhängig vom Verfahren zur Neukonfiguration des Datenverkehrs zwischen Master M und den Slaves S1, ..., Sn ist.

Die Konfigurations-Datenpakete DPMC der Slaves S1, ..., Sn zur Neukonfiguration des Querverkehrs werden bevorzugt, aber nicht notwendiger Weise, als asynchroner Datenverkehr realisiert. Damit kann erreicht werden, dass die Neukonfiguration innerhalb weniger Sendezyklen, im Idealfall innerhalb eines Sendezyklus, abgeschlossen ist, was ein besonders schnelles Umschalten des Querverkehrs ermöglicht. Hierbei würde ein Slave S1, ..., Sn das Start-Datenpaket DPN in einem Sendezyklus empfangen und im selben Sendezyklus im asynchronen Bereich die Konfigurations-Datenpakete DPMC absenden. Insbesondere wird in diesem Fall sichergestellt, dass der Querverkehr umgestellt ist, bevor der nächste Sendezyklus beginnt, womit Datenverlust durch an der Fehlerstelle F verlorengegangene Datenpakete verhindert werden kann, was insbesondere in einem echtzeitfähigen Datennetzwerk wichtig ist.

Wenn das Ringstatus-Datenpaket DPR als Multicast Datenpaket im isochronen Teil des Sendzyklus (und damit zeitlich genau geplant) versendet wird und ein Schwellwert eingestellt ist, wie viele Datenpakete verloren gehen müssen, bevor umgeschaltet wird, dann kann man, im Zusammenhang mit dem Wissen, wie lange das Versenden des Fehler-Datenpakets DPF und der Konfigurations-Datenpakete DPMC dauert, eine genaue Abschätzung machen, wie lange es dauert, bis der Ring im Fehlerfall wieder ohne Datenpaketverlust aktiv ist.

Die vorgegebene Zykluszeit beeinflusst aber auch die maximale Größe des Ringes R. Im Fehlerfall kann der Querverkehr über die Fehlerstelle nicht aufrechterhalten werden, sondern muss um diesen herum geleitet werden, womit es zu längeren Laufzeiten der Datenpakete des Querverkehrs kommt. Damit muss die Anzahl der Netzwerkknoten im Ring multipliziert mit der jeweiligen Latenzzeit der Netzwerkknoten (die Zeit, die ein Netzwerkknoten braucht um ein an einem ersten Port eingehendes Datenpaket an einem zweiten Port zu versenden) kleiner sein, als die Zykluszeit. Ist diese Bedingung nicht erfüllt, kann der Querverkehr im Fehlerfall nicht aufrecht erhalten werden, da der Querverkehr dann unter Umständen nicht innerhalb der Zykluszeit abgewickelt werden kann.

Eine weitere Einschränkung hinsichtlich der zulässigen Größe des Ringes R kann sich daraus ergeben, wenn die Neukonfiguration innerhalb eines Sendezyklus abgeschlossen sein soll. Ein Master M kann innerhalb eines Sendezyklus nur einer gewissen Anzahl von Slaves S1, ..., Sn ein Start-Datenpaket DPN senden. Außerdem können nur eine bestimmte Anzahl von Slaves S1, ..., Sn innerhalb des Sendezyklus im asynchronen Bereich des Sendezyklus ihre Konfigurations-Datenpakete DPMC versenden. Beides beschränkt die mögliche Anzahl von Netzwerkknoten im Ring R, wenn der Querverkehr besonders schnell, also innerhalb eines Sendezyklus, umgeschaltet werden soll.

## Patentansprüche

1. Verfahren zur Datenkommunikation in Form von Querverkehr zwischen zumindest zwei Slaves (S1, S2) eines ringförmigen echtzeitfähigen Datennetzwerks (1), wobei ein Master (M) mit einem ersten Zweig (Z1) des ringförmigen echtzeitfähigen Datennetzwerks (1) mit einer Anzahl von Slaves (S1, S2) und mit einem zweiten Zweig (Z2) des ringförmigen Datennetzwerks (1) mit einer Anzahl von Slaves (S4, Sn) verbunden wird und die Enden der Zweige (Z1, Z2) mit einem als Ringmaster (RM) vorgesehen Slave (S3) verbunden werden, **dadurch gekennzeichnet, dass** im Falle des Auftretens eines Fehlers (F) im ringförmigen echtzeitfähigen Datennetzwerk (1) der Ringmaster (RM) zum Weiterleiten von Datenpaketen konfiguriert wird und der Master (M) die zumindest zwei über Querverkehr miteinander kommunizierenden Slaves (S1, S2) auffordert, an die jeweils anderen Slaves (S1,...,Sn) des ringförmigen echtzeitfähigen Datennetzwerkes Konfigurations-Datenpakete (DPMC1, DPMC2) als Multicast-Datenpakete zu versenden, um Adresstabellen (AT1, AT2) in den zumindest zwei über Querverkehr miteinander kommunizierenden Slaves (S1, S2) anzupassen.

2. Verfahren zur Datenkommunikation in Form von Querverkehr zwischen zumindest zwei Slaves (S1, S2) eines ringförmigen echtzeitfähigen Datennetzwerks (1), wobei ein Master (M) mit einem ersten Zweig (Z1) des ringförmigen echtzeitfähigen Datennetzwerks (1) mit einer Anzahl von Slaves (S1, S2) und mit einem zweiten Zweig (Z2) des ringförmigen echtzeitfähigen Datennetzwerks (1) mit einer Anzahl von Slaves (S4, Sn) verbunden wird und die Enden der Zweige (Z1, Z2) mit einem als Ringmaster (RM) vorgesehen Slave (S3) verbunden werden, **dadurch gekennzeichnet, dass** im Falle des Behebens eines Fehlers (F) im ringförmigen echtzeitfähigen Datennetzwerk (1) der Ringmaster (RM) zum Blockieren von zumindest Multicast-Datenpaketen konfiguriert wird und der Master (M) die zumindest zwei über Querverkehr miteinander kommunizierenden Slaves (S1, S2) auffordert, an die jeweils anderen Slaves (S1,...,Sn) des ringförmigen echtzeitfähigen Datennetzwerkes (1) Konfigurations-Datenpakete (DPMC1, DPMC2) als Mulitcast-Datenpakete zu versenden, um Adresstabellen (AT1, AT2) in den zumindest zwei über Querverkehr miteinander kommunizierenden Slaves (S1, S2) anzupassen.

3. Verfahren nach Anspruch 1 oder 2, **dadurch gekennzeichnet, dass** der Master in beide Zweige (Z1, Z2) des ringförmigen echtzeitfähigen Datennetzwerks (1) Multicast-Datenpakete an alle im Ring vorhandenen Slaves (S1, ..., Sn) versendet.

4. Verfahren nach Anspruch 1 oder 2, **dadurch gekennzeichnet, dass** vom Master (M) in zeitlichen Abständen in beide Zweige (Z1, Z2) des ringförmigen echtzeitfähigen Datennetzwerks (1) Ringstatus-Datenpakete (DPR) als Multicast-Datenpakete versendet werden, die vom Ringmaster (RM) empfangen werden und der Ringmaster (RM) einen Fehler (F) im ringförmigen echtzeitfähigen Datennetzwerk (1) detektiert, wenn die Ringstatus-Datenpakete (DPR) ein- oder mehrmals hintereinander aus nur einem Zweig (Z1, Z2) empfangen werden oder der Ringmaster (RM) das Beheben eines Fehlers (F) im ringförmigen echtzeitfähigen Datennetzwerk (1) detektiert, wenn die Ringstatus-Datenpakete (DPR) ein- oder mehrmals hintereinander aus beiden Zweigen (Z1, Z2) empfangen werden.

5. Verfahren nach Anspruch 4, **dadurch gekennzeichnet, dass** als Ringstatus-Datenpakete (DPR) im Kommunikationsprotokoll der Datenkommunikation vorgesehene Multicast-Datenpakete verwendet werden.

6. Verfahren nach Anspruch 4 oder 5, **dadurch gekennzeichnet, dass** der Ringmaster (RM) ein Fehler-Datenpaket (DPF) an den Master (M) sendet, um den Master (M) vom Auftreten eines Fehlers (F) zu informieren.

7. Verfahren nach Anspruch 1 oder 2, **dadurch gekennzeichnet, dass** der Master (M) ein Start-Datenpaket (DPN) versendet, um die zumindest zwei über Querverkehr miteinander kommunizierenden Slaves (S1, S2) zum Versenden der Konfigurations-Datenpakete (DPMC1, DPMC2) aufzufordern.

8. Ringförmiges echtzeitfähige Datennetzwerk (1), wobei ein Master (M) mit einem ersten Zweig (Z1) des ringförmigen echtzeitfähigen Datennetzwerks (1) mit einer Anzahl von Slaves (S1, S2) und mit einem zweiten Zweig (Z2) des ringförmigen Datennetzwerks (1) mit einer Anzahl von Slaves (S4, Sn) verbunden und die Enden der Zweige (Z1, Z2) mit einem als Ringmaster (RM) vorgesehen Slave (S3) verbunden sind und wobei zumindest zwei Slaves (S1, S2) zur Datenkommunikation in Form von Querverkehr konfiguriert sind, **dadurch gekennzeichnet, dass** der Ringmaster (RM) konfiguriert ist, um im Falle des Auftretens eines Fehlers (F) im ringförmigen echtzeitfähigen Datennetzwerk (1) von Datenpaketen weiterzuleiten und die zumindest zwei über Querverkehr miteinander kommunizierenden Slaves (S1, S2) aufzufordern, an die jeweils anderen Slaves (S1,...,Sn) des ringförmigen echtzeitfähigen Datennetzwerkes Konfigurations-Datenpakete (DPMC1, DPMC2) als Multicast-Datenpakete zu versenden, um Adresstabellen (AT1, AT2) in den zumindest zwei über Querverkehr miteinander kommunizierenden Slaves (S1, S2) anzupassen.

## Claims

1. Method for data communication in the form of cross traffic between at least two slaves (S1, S2) of a ring-shaped, real-time capable data network (1), a master (M) being connected to a number of slaves (S1, S2) by means of a first branch (Z1) of the ring-shaped, real-time capable data network (1) and to a number of slaves (S4, Sn) by means of a second branch (Z2) of the ring-shaped data network (1) and the ends of the branches (Z1, Z2) being connected to a slave (S3) provided as a ring master (RM), **characterized in that**, in the event of an error (F) occurring in the ring-shaped, real-time capable data network (1), the ring master (RM) is configured to forward data packets and the master (M) prompts the at least two slaves (S1, S2) which are communicating with one another via cross traffic to transmit configuration data packets (DPMC1, DPMC2) as multicast data packets to the other slaves (S1, ..., Sn) of the ring-shaped, real-time capable data network in order to adjust address tables (AT1, AT2) in the at least two slaves (S1, S2) which are communicating with one another via cross traffic.

2. Method for data communication in the form of cross traffic between at least two slaves (S1, S2) of a ring-shaped, real-time capable data network (1), a master (M) being connected to a number of slaves (S1, S2) by means of a first branch (Z1) of the ring-shaped, real-time capable data network (1) and to a number of slaves (S4, Sn) by means of a second branch (Z2) of the ring-shaped, real-time capable data network (1) and the ends of the branches (Z1, Z2) being connected to a slave (S3) provided as a ring master (RM), **characterized in that**, in the event of an error (F) being eliminated in the ring-shaped, real-time capable data network (1), the ring master (RM) is configured to block at least multicast data packets and the master (M) prompts the at least two slaves (S1, S2) which are communicating with one another via cross traffic to transmit configuration data packets (DPMC1, DPMC2) as multicast data packets to the other slaves (S1, ..., Sn) of the ring-shaped, real-time capable data network (1) in order to adjust address tables (AT1, AT2) in the at least two slaves (S1, S2) which are communicating with one another via cross traffic.

3. Method according to either claim 1 or claim 2, **characterized in that** the master transmits multicast data packets to all slaves (S1, ..., Sn) in the ring in both branches (Z1, Z2) of the ring-shaped, real-time capable data network (1).

4. Method according to either claim 1 or claim 2, **characterized in that** ring status data packets (DPR) are transmitted as multicast data packets by the master (M) in both branches (Z1, Z2) of the ring-shaped, real-time capable data network (1) at time intervals, which data packets are received by the ring master (RM) and the ring master (RM) detects an error (F) in the ring-shaped, real-time capable data network (1) if the ring status data packets (DPR) are received once or several times in succession from only one branch (Z1, Z2) or the ring master (RM) detects the elimination of an error (F) in the ring-shaped, real-time capable data network (1) if the ring status data packets (DPR) are received once or several times in succession from both branches (Z1, Z2).

5. Method according to claim 4, **characterized in that** multicast data packets provided in the communication protocol of the data communication are used as ring status data packets (DPR).

6. Method according to either claim 4 or claim 5, **characterized in that** the ring master (RM) sends an error data packet (DPF) to the master (M) in order to inform the master (M) that an error (F) has occurred.

7. Method according to either claim 1 or claim 2, **characterized in that** the master (M) transmits a start data packet (DPN) in order to prompt the at least two slaves (S1, S2) which are communicating with one another via cross traffic to transmit the configuration data packets (DPMC1, DPMC2).

8. Ring-shaped, real-time capable data network (1), a master (M) being connected to a number of slaves (S1, S2) by means of a first branch (Z1) of the ring-shaped, real-time capable data network (1) and to a number of slaves (S4, Sn) by means of a second branch (Z2) of the ring-shaped data network (1) and the ends of the branches (Z1, Z2) being connected to a slave (S3) provided as a ring master (RM), and at least two slaves (S1, S2) being configured for data communication in the form of cross traffic, **characterized in that**, in the event of an error (F) occurring in the ring-shaped, real-time capable data network (1), the ring master (RM) is configured to forward data packets and prompt the at least two slaves (S1, S2) which are communicating with one another via cross traffic to transmit configuration data packets (DPMC1, DPMC2) as multicast data packets to the other slaves (S1, ..., Sn) of the ring-shaped, real-time capable data network in order to adjust address tables (AT1, AT2) in the at least two slaves (S1, S2) which are communicating with one another via cross traffic.

## Revendications

1. Procédé de communication de données sous forme de trafic transversal entre au moins deux esclaves (S1, S2) d'un réseau de données en anneau (1) en temps réel, dans lequel un maître (M) comportant une première branche (Z1) du réseau de données en anneau (1) en temps réel est connecté à un certain nombre d'esclaves (S1, S2), et comportant une seconde branche (Z2) du réseau de données en anneau (1) est connecté à un certain nombre d'esclaves (S4, Sn), et les extrémités des branches (Z1, Z2) sont connectées à un esclave (S3) conçu comme maître à anneau (RM), **caractérisé en ce qu'**en cas de survenue d'une erreur (F) dans le réseau de données en anneau (1) en temps réel, le maître à anneau (RM) est configuré pour transmettre des paquets de données et le maître (M) ordonne aux au moins deux esclaves communiquant entre eux par l'intermédiaire du trafic transversal (S1, S2) d'envoyer des paquets de données de configuration (DPMC1, DPMC2) en tant que paquets de données multidiffusion aux autres esclaves (S1, ..., Sn) respectifs du réseau de données en anneau en temps réel de façon à intégrer des tables d'adresses (AT1, AT2) dans les au moins deux esclaves (S1, S2) communiquant entre eux par l'intermédiaire du trafic transversal.

2. Procédé de communication de données sous forme de trafic transversal entre au moins deux esclaves (S1, S2) d'un réseau de données en anneau (1) en temps réel, dans lequel un maître (M) comportant une première branche (Z1) du réseau de données en anneau (1) en temps réel est connecté à un certain nombre d'esclaves (S1, S2), et comportant une seconde branche (Z2) du réseau de données en anneau (1) en temps réel est connecté à un certain nombre d'esclaves (S4, Sn), et les extrémités des branches (Z1, Z2) sont connectées à un esclave (S3) conçu comme maître à anneau (RM), **caractérisé en ce qu'**en cas de résolution d'une erreur (F) dans le réseau de données en anneau (1) en temps réel, le maître à anneau (RM) est configuré pour bloquer au moins certains paquets de données multidiffusion et le maître (M) ordonne aux au moins deux esclaves communiquant entre eux par l'intermédiaire du trafic transversal (S1, S2) d'envoyer des paquets de données de configuration (DPMC1, DPMC2) en tant que paquets de données multidiffusion aux autres esclaves (S1, ..., Sn) respectifs du réseau de données en anneau (1) en temps réel de façon à intégrer des tables d'adresses (AT1, AT2) dans les au moins deux esclaves (S1, S2) communiquant entre eux par l'intermédiaire du trafic transversal.

3. Procédé selon la revendication 1 ou 2, **caractérisé en ce que** le maître envoie des paquets de données multidiffusion à tous les esclaves (S1, .... Sn), présents dans l'anneau, dans les deux branches (Z1, Z2) du réseau de données en anneau (1) en temps réel.

4. Procédé selon la revendication 1 ou 2, **caractérisé en ce que** le maître (M) envoie, à des intervalles de temps, des paquets de données d'état d'anneau (DPR) en tant que paquets de données multidiffusion aux deux branches (Z1, Z2) du réseau de données en anneau (1) en temps réel, lesquels paquets de données d'état d'anneau sont reçus par le maître à anneau (RM), et le maître à anneau (RM) détecte une erreur (F) dans le réseau de données en anneau (1) en temps réel lorsque les paquets de données d'état d'anneau (DPR) sont reçus une ou plusieurs fois de suite en provenance d'une seule branche (Z1, Z2), ou le maître à anneau (RM) détecte la résolution d'une erreur (F) dans le réseau de données en anneau (1) en temps réel lorsque les paquets de données d'état d'anneau (DPR) sont reçus une ou plusieurs fois de suite en provenance des deux branches (Z1, Z2).

5. Procédé selon la revendication 4, **caractérisé en ce que** des paquets de données multidiffusion prévus sont utilisés comme paquets de données d'état d'anneau (DPR) dans le protocole de communication de la communication de données.

6. Procédé selon la revendication 4 ou 5, **caractérisé en ce que** le maître à anneau (RM) envoie un paquet de données d'erreur (DPF) au maître (M) pour informer le maître (M) de la survenue d'une erreur (F).

7. Procédé selon la revendication 1 ou 2, **caractérisé en ce que** le maître (M) envoie un paquet de données de départ (DPN) pour ordonner aux au moins deux esclaves (S1, S2) communiquant entre eux par l'intermédiaire du trafic transversal d'envoyer les paquets de données de configuration (DPMC1, DPMC2).

8. Réseau de données en anneau (1) en temps réel, dans lequel un maître (M) comportant une première branche (Z1) du réseau de données en anneau (1) en temps réel est connecté à un certain nombre d'esclaves (S1, S2), et comportant une seconde branche (Z2) du réseau de données en anneau (1) est connecté à un certain nombre d'esclaves (S4, Sn), et les extrémités des branches (Z1, Z2) sont connectées à un esclave (S3) conçu comme maître à anneau (RM), et dans lequel au moins deux esclaves (S1, S2) sont configurés pour la communication de données sous forme de trafic transversal, **caractérisé en ce que** le maître à anneau (RM) est configuré pour transmettre des paquets de données en cas de survenue d'une erreur (F) dans le réseau de données en anneau (1) en temps réel et pour ordonner aux au moins deux esclaves (S1, S2) communiquant entre eux par l'intermédiaire du trafic transversal d'envoyer des paquets de données de configuration (DPMC1, DPMC2) en tant que paquets de données multidiffusion aux autres esclaves (S1, ..., Sn) respectifs du réseau de données en anneau en temps réel de façon à intégrer des tables d'adresses (AT1, AT2) dans les au moins deux esclaves (S1, S2) communiquant entre eux par l'intermédiaire du trafic transversal.
